# EUROPEAN PATENT SPECIFICATION

(11) **EP 0 297 689 B1**
(45) Date of publication and mention of the grant of the patent: **18.08.1993**
(21) Application number: 88201371.7
(22) Date of filing: 12.04.1985
(51) Int. Cl.: G11B 11/10

(54) **Magneto-optic memory element**
Magneto-optisches Speicherelement
Elément de mémoire magnéto-optique

(30) Priority: 13.04.1984 JP 75541/84; 22.05.1984 JP 104207/84
(43) Date of publication of application: 04.01.1989
(62) Divisional of application: 85302580.7
(73) Proprietor: SHARP KABUSHIKI KAISHA, Osaka 545 (JP)
(72) Inventor: Ohta, Kenji, Yao-shi Osaka-fu (JP); Takahashi, Akira, Nara-shi Nara-ken (JP); Katayama, Hiroyuki, Nara-shi Nara-ken (JP); Hirogane, Junji, Tenri-shi Nara-ken (JP); Murakami, Yoshiteru, Nishinomiya-shi Hyogo-ken (JP)
(74) Representative: Brown, Kenneth Richard

(56) References cited:
- PATENT ABSTRACTS OF JAPAN, vol. 6, no. 84 (P-117)(962) 22 May 1982; & JP-A-57 020933
- F. Albert Cotton and Geoffrey Wilkinson, F.R.S.: "Advanced Inorganic Chemistry", Interscience Publishers, A Division of John Wiley & Sons New York - London - Sydney - Toronto, 1972, pp. 890-891 and 990-992

## Description

The present invention relates to a magneto-optic memory element on which a laser beam is made to impinge to record, read out or erase information onto or from the magneto-optic memory element.

There has recently been developed a magneto-optic memory element which is used in an optical memory disc storing alterable information. It has been found that the most effective magneto-optic memory element includes a recording medium made of an amorphous alloy thin-film consisting of rare earth metal and transition metal. Such a magneto-optic memory element is generally stable because the recording bits are not affected by grain boundaries, and a large size recording medium can be easily formed.

The engineering group including the inventors of the present invention has discovered that the recording medium is deteriorated when the recording medium is exposed to the oxygen or to moisture. In order to protect the recording medium from oxygen and moisture, a magneto-optic memory element has been proposed by this engineering group, wherein the amorphous alloy thin-film recording layer is sandwiched between a pair of transparent dielectric layers. A basic structure of the improved magneto-optic memory element is disclosed in our published European Patent Application number 0 111 988 A1.

The magneto-optic memory element disclosed in the above-mentioned European Patent Application No. 0 111 988 A1 is useful because the transparent dielectric layers function to effectively combine the Kerr effect and the Faraday effect so as to increase the Kerr rotation angle. However, in the magneto-optic memory element disclosed in that application there is a possibility that the amorphous alloy thin-film recording layer is damaged due to the oxidation caused by the SiO or SiO₂ dielectric layer. In order to further improve the magneto-optic memory element, the engineering group including the inventors of the present invention has proposed a magneto-optic memory element, wherein an amorphous alloy thin-film recording layer is sandwiched between a pair of transparent nitride films. A typical structure of this magneto-optic memory element is disclosed in published European Patent Application No. 0139474.

The nitride films effectively protect the amorphous alloy thin-film recording layer from the oxygen and moisture at the centre portion thereof. However, the periphery of the element includes a bare recording layer at the edge of the element. Thus, there is a possibility that the amorphous alloy thin-film recording layer is deteriorated from the periphery thereof in the magneto-optic memory element disclosed in the European Application No. 0139474. The invention claimed in our co-pending European Patent Application published under serial no. 0161807 A1, from which this present-application is divided, is directed to the alleviation of this problem of peripheral deterioration.

Furthermore, in Application No. 0139474, an Al reflection layer is provided so as to enhance the S/N ratio in the reproduced signal by increasing the photoelectric-magnetic effects (combined Kerr effect and Faraday effect). However, the effectiveness of the Al film to produce such enhancement depends upon the film having a high reflection factor. The present inventors have established that turbidity produced in the Al reflection film during its formation is a possible cause of reduction in the reflection factor.

JP-A-5720933 discloses a stable recording carrier comprising a coating of an alloy of a first metal having a high melting point and high corrosion resistance and a metal having high reflectivity or a high dielectric constant or base metal on the surface of a base material, such as vinyl chloride, with grooves or lines of pits carrying the recording information. Sixteen specified metals for the first metal of the alloy include nickel and platinum, and seven specified metals for the second metal of the alloy include aluminium.

The present invention is directed to the aforementioned problem of turbidity, and provides a process for manufacturing an optical memory element comprising a substrate, a magneto-optic memory layer and an aluminium reflection layer, the process including the formation of said magneto-optic memory layer on said substrate and then the formation of said reflection layer on said magneto-optical memory layer, wherein at least one further element is included in said aluminium reflection layer, said element being selected from the group consisting of palladium, platinum and nickel, for preventing the formation of turbidity in said aluminium reflection layer during its formation.

### BRIEF DESCRIPTION OF THE DRAWINGS

The present invention will be better understood from the detailed description given hereinbelow and the accompanying drawings which are given by way of illustration only, and thus are not limitative of the present invention and wherein:
FIGURE 1 is a sectional view of an essential part of an embodiment of a magneto-optic memory element of the present invention;
FIGURE 2 is a sectional view of an essential part of another embodiment of a magneto-optic memory element of the present invention;
FIGURE 3 is a sectional view of an essential part of still another embodiment of a magneto-optic memory element of the present invention; and
FIGURE 4 is a sectional view of an essential part of a further embodiment of a magneto-optic memory element of the present invention.

### DESCRIPTION OF THE PREFERRED EMBODIMENTS

A magneto-optic memory element of the present invention includes a transparent substrate 10, and a pair of transparent dielectric layers 12 and 14 . Each of the transparent dielectric layers is a moisture-proof and oxygen-proof film such as AlN film or a Si₃N₄ film. An amorphous alloy thin-film recording layer 16, for example, an alloy film of the rare earth metal and the transition metal, is sandwiched between the pair of transparent dielectric layers 12 and 14. A reflection film 18 is formed on the transparent dielectric layer 14, the transparent dielectric layer 14 and the reflection film 18 functioning, in combination, to enhance the photoelectric-magnetic effects (combined Kerr effect and Faraday effect). The peripheries of the pair of transparent dielectric layers 12 and 14 are extended so that the transparent dielectric layers 12 and 14 are larger than the amorphous alloy thin-film recording layer 16. That is, the periphery of the amorphous alloy thin-film recording layer 16 is sealed by the pair of transparent dielectric layers 12 and 14. More specifically, peripheries 120 and 140 of the transparent dielectric layers 12 and 14 function, in combination, to protect a periphery 160 of the amorphous alloy thin-film recording layer 16 from the moisture and oxygen. If the both transparent dielectric layers 12 and 14 are formed by a same matrial such as a nitride film, the boundary is tightly fixed by the pair of transparent dielectric layers 12 and 14 at the peripheries thereof.

The structure of the magneto-optic memory element of the present invention is applicable to an element of which the transparent substrate 10 is made of either one of a glass substrate or a moisture permeable resin substrate such as an acrylic resin substrate or a polycarbonate substrate.

The magneto-optic memory element of the above-mentioned structure shows a stable operation, and the element , even at the periphery thereof, is not damaged after the high temperature and the high humidity test carried out in the condition of temperature of 60°C, and the humidity of 95%.

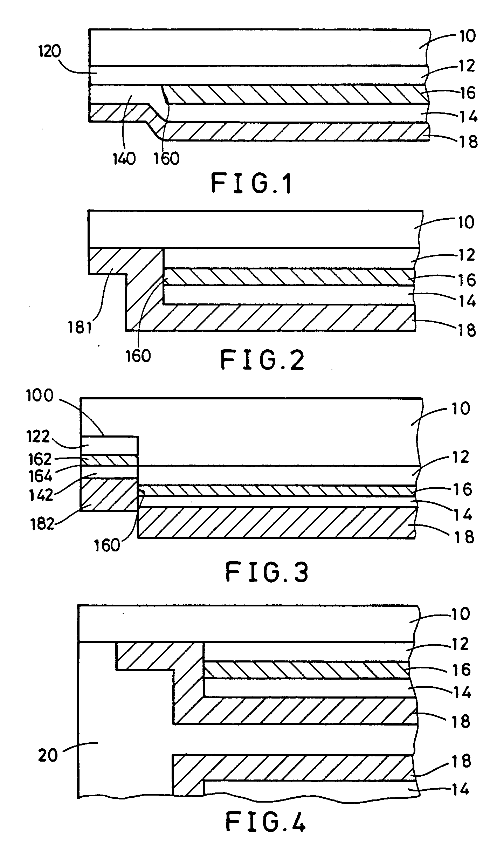

FIGURE 2 shows another embodiment of the magneto-optic memory element of the present invention. Like elements corresponding to those of FIGURE 1 are indicated by like numerals.

The transparent substrate 10 has a size larger than the pair of transparent dielectric layers 12 and 14, preferably made of a pair of AlN films, and the amorphous alloy thin-film recording layer 16, preferably made of a thin-film alloy of the rare earth element and the transition metal such as GdNdFe, TbFe or TbFeCo. The moisture-proof and oxygen-proof reflection film 18 made of aluminium and including a turbidity-preventing element, as discussed later herein, is disposed on the transparent dielectric film 14 so that the reflection film 18 is extended (181) to cover the periphery 160 of the amorphous alloy thin-film recording layer 16. The reflection film 18 is fixed to the transparent substrate 10 at the periphery 181 thereof.

FIGURE 3 shows still another embodiment of the magneto-optic memory element of the present invention. Like elements corresponding to those of FIGURE 1 are indicated by like numerals.

The transparent substrate 10 is provided with a cut-away portion 100 at the periphery thereof. The cut-away portion 100 has a depth of about 120 nm. The transparent dielectric layer 12 (and 122), which does not contain oxygen, and is preferably an AlN film, is formed on the transparent substrate 10 (and 100) to have a thickness of about 100 nm. Then, the amorphous alloy thin-film recording layer 16 (and 162), preferably a GdTbFe film, is formed on the transparent dielectric layer 12 (and 122) to have a thickness of about 20 nm. The transparent dielectric layer 14 (and 142), which does not include oxygen, and is preferably an AlN film, is formed on the amorphous alloy thin-film recording layer 16 (and 162) to have a thickness of about 50 nm. Then, the reflection film 18 (and 182) is formed on the transparent dielectric layer 14 (and 142) to have a thickness of about 150 nm. The periphery of each layer (122, 162, 142 and 182) follows the cut-away portion 100. The edge 164 of the amorphous alloy thin-film recording layer 162 may be damaged by the atmosphere. However, the edge 160 of the amorphous alloy thin-film recording layer 16 is protected by the reflection film 182. If the periphery portion 162 is not used as the actual recording area, the magneto-optic memory element of FIGURE 3 ensures a stable operation.

FIGURE 4 shows a further embodiment of the magneto-optic memory element of the present invention. Like elements corresponding to those of FIGURE 1 are indicated by like numerals.

Two magneto-optic memory elements, each having the similar structure as the element shown in FIGURE 2, are fixed to each other through the use of an adhesive 20 such as a photopolymer, in a manner that the transparent substrates 10 face the atmosphere, and the reflection films 18 confront each other.

As already discussed in the copending U. S. Patent Application Ser. No. 648,741, the reflection film 18 must have a high index of reflection to obtain the large apparent Kerr rotation angle. Normally, the magneto-optic memory element is formed by the sputtering method. Since aluminum is stable and is commercial available, the aluminum film is most widely used as the reflection film in the magneto-optic memory element. However, there is a possibility that the turbidity is formed in the Al reflection film during the formation of the Al reflection film in the conventional element. The present inventors have discovered that a clean Al reflection film is obtained under a predetermined manufacturing condition or when the material of the reflection film is properly selected. Following is a preferred example wherein the clean reflection film is formed.

The transparent substrate 10 is either a glass substrate, a polycarbonate substrate, or an acrylic resin substrate. The transparent dielectric layer 12 is preferably a transparent AlN film having a thickness of about 100 nm. The amorphous alloy thin-film recording layer 16 is a GdTbFe film having a thickness of about 27 nm. The second transparent dielectric layer 14 is an AlN film having a thickness of about 35 nm. The reflection film 18 is an alloy film including aluminum (Al) and nickel (Ni). The Al-Ni alloy film is formed by sputtering a target of aluminum (Al) to which nickel (Ni) is added. The Al-Ni reflection film preferably has a thickness greater than 60 nm.

The Al-Ni reflection film 18 does not include turbidity even though the reflection film 18 is formed on the AlN dielectric layer 14. The Al-Ni reflection film 18 is oxygen-proof and water-proof and, therefore, the Al-Ni reflection film is suited for ensuring a stable operation of the magneto-optic memory element. Of course, the index of reflection is high enough to produce a large apparent Kerr rotation angle. A preferred reflection film can be formed by the sputtering method with the target of aluminum (Al) to which either nickel (Ni), palladium (Pd) or platinum (Pt) is added.

The invention being thus described, it wil be obvious that the same may be varied in many ways without departure from the spirit and scope of the invention. For example, the avoidance of turbidity in the reflective layer in the manner disclosed herein may be applied even when moisture and oxygen proof layers are not used. Thus, the present invention provides a magneto-optical memory element having a magneto-optic recording layer and an Al reflection layer, the reflection layer including a turbidity reducing substance. The reflection turbidity-reducing substance is preferably Ni, Pd or Pt.

## Claims

1. A process for manufacturing an optical memory element comprising a substrate, a magneto-optic memory layer and an aluminium reflection layer, the process including the formation of said magneto-optic memory layer on said substrate and then the formation of said reflection layer on said magneto-optical memory layer, wherein at least one further element is included in said aluminium reflection layer, said element being selected from the group consisting of palladium, platinum and nickel, for preventing the formation of turbidity in said aluminium reflection layer during its formation.

2. A process for manufacturing an optical memory element according to claim 1, wherein the optical memory element includes a dielectric layer disposed between the substrate and the magneto-optic memory layer.

3. A process for manufacturing an optical memory element according to claim 1, wherein the optical memory element includes a dielectric layer disposed between the magneto-optic memory layer and the aluminium reflection layer.

## Patentansprüche

1. Verfahren für die Herstellung eines optischen Speicherelements, das ein Substrat, eine magnetooptische Speicherschicht und eine Aluminium-Reflexionsschicht umfaßt, wobei das Verfahren die Bildung der magnetooptischen Speicherschicht auf dem Substrat und dann die Bildung der Reflexionsschicht auf dar magnetooptischen Speicherschicht beinhaltet, wobei mindestens ein weiteres Element in der Aluminium-Reflexionsschicht enthalten ist, wobei dieses Element aus der Gruppe gewählt wird, die aus Palladium, Platin und Nickel besteht, um die Bildung einer Trübung in der Aluminium-Reflexionsschicht während der Bildung derselben zu verhüten.

2. Verfahren für die Herstellung eines optischen Speicherelemente nach Anspruch 1, bei welchem das optische Speicherelement eine dielektrische Schicht einschließt, die zwischen dem Substrat und der magnetooptischen Speicherschicht angeordnet ist.

3. Verfahren für die Herstellung eines optischen Speicherelements nach Anspruch 1, bei welchem das optische Speicherelement eine dielektrische Schicht einschließt, die zwischen der magnetooptischen Speicherschicht und der Aluminium-Reflexionsschicht angeordnet ist.

## Revendications

1. Procédé de fabrication d'un élément de mémoire optique comprenant un substrat, une couche de mémoire magnéto-optique et une couche réflectrice en aluminium, le procédé consistant à former ladite couche de mémoire magnéto-optique sur ledit substrat, puis à former ladite couche réflectrice sur ladite couche de mémoire magnéto-optique, caractérisé en ce que au moins un élément supplémentaire est ajouté à ladite couche réflectrice en aluminium, ledit élément étant choisi dans le groupe composé du palladium, du platine et du nickel, afin d'empêcher l'apparition d'une turbidité dans ladite couche réflectrice en aluminium pendant sa formation.

2. Procédé de fabrication d'un élément de mémoire optique selon la revendication 1, caractérisé en ce que l'élément de mémoire optique comprend une couche diélectrique disposée entre le substrat et la couche de mémoire magnéto-optique.

3. Procédé de fabrication d'un élément de mémoire optique selon la revendication 1, caractérisé en ce que l'élément de mémoire optique comprend une couche diélectrique disposée entre la couche de mémoire magnéto-optique et la couche réflectrice en aluminium.
